# EUROPÄISCHE PATENTSCHRIFT

(11) **EP 4 071 982 B1**
(45) Veröffentlichungstag und Bekanntmachung des Hinweises auf die Patenterteilung: **23.07.2025**
(21) Anmeldenummer: 22161778.0
(22) Anmeldetag: 14.03.2022
(51) Int. Cl.: H02K 7/00, F16H 57/04, H02K 7/116, H02K 9/193, H02K 5/20

(54) **ANTRIEBSANORDNUNG FÜR EIN KRAFTFAHRZEUG**
DRIVE ASSEMBLY FOR A MOTOR VEHICLE
DISPOSITIF D'ENTRAINEMENT POUR UN VÉHICULE AUTOMOBILE

(30) Priorität: 23.03.2021 DE 102021202837
(43) Veröffentlichungstag der Anmeldung: 12.10.2022
(73) Patentinhaber: VOLKSWAGEN AG, 38440 Wolfsburg (DE)
(72) Erfinder: Gorges, Sebastian, 59964 Medebach-Dreislar (DE); Hensel, Roman, 34582 Borken (DE); Plogmann, Jörg, 34560 Fritzlar (DE); Weber, Dr. Jonas, 34121 Kassel (DE); Wehry, Eduard, 37213 Witzenhausen (DE); Haag, Benjamin, 34134 Kassel (DE); Kolze, Fabian, 39179 Barleben (DE)

(56) Entgegenhaltungen:
- EP-A1- 2 899 857
- EP-A1- 4 002 656
- WO-A1-2021/042466
- US-A1- 2011 285 220
- US-A1- 2020 052 534

## Beschreibung

Die Erfindung betrifft eine Antriebsanordnung für ein Kraftfahrzeug, umfassend
- ein Gehäuse mit einem Motorraum und einem an den Motorraum angrenzenden, über eine innere Stirnwand von diesem abgegrenzten Getrieberaum, jeweils begrenzt durch besagte innere Stirnwand, eine zugeordnete äußere Stirnwand und eine sich in axialer Richtung zwischen der inneren und der zugeordneten äußeren Stirnwand erstreckende Mantelwand,
- eine in dem Motorraum angeordnete elektrische Maschine mit einem gehäusefesten Stator und einem radial innerhalb des Stators angeordneten Rotor mit einer die innere Stirnwand sowie die äußere Stirnwand des Motorraums durchsetzenden, im Motorraum drehbar gelagerten, hohlen Rotorwelle, welche mit einer offenen, eine zentrale Durchgangsöffnung aufweisenden Stirnfläche versehen ist, und
- einen aktiven Ölkreislauf mit einer Ölpumpe, mittels derer Öl aus einem Ölreservoir durch einen wenigstens einen ersten Zweig umfassenden Ölverteilerkanal über ein an das stromabwärtige Ende des ersten Zweiges (78a) des Ölverteilerkanals angeschlossenes Ölleitrohr (88), welches mit seinem freien Ende durch die zentrale Durchgangsöffnung in den Innenraum der Rotorwelle ragt, in den Innenraum der hohlen Rotorwelle pumpbar ist.

Eine derartige Antriebsanordnung ist bekannt aus der US 2020/0052534 A1.

Die EP 3 028 888 B1 offenbart einen elektrischen Antrieb für ein Kraftfahrzeug, der als eine kompakte Antriebsanordnung ausgebildet ist, welche einerseits das eigentliche Antriebsaggregat und andererseits ein Getriebe zur Übersetzung und Verteilung des von der elektrischen Maschine gelieferten Momentes umfasst. Beide Einheiten sind in einem gemeinsamen Gehäuse angeordnet, welches jedoch aufgrund der unterschiedlichen Anforderungen der einzelnen Einheiten in im Wesentlichen getrennte Räume, nämlich einen Motorraum und einem Getrieberaum, unterteilt ist. Beide Räume werden von einer gemeinsamen Welle durchsetzt, die im Motorraum als Rotorwelle und im Getrieberaum als Getriebeeingangswelle wirkt. Dies bedeutet, dass Motorraum und Getrieberaum in axialer Richtung benachbart zueinander angeordnet sind und sich eine gemeinsame Stirnwand, die hier als innere Stirnwand bezeichnet wird, teilen. Auf der axial jeweils anderen, gegenüberliegenden Seite ist jeder Raum von einer weiteren, hier jeweils als äußere Stirnwand bezeichneten Stirnwand begrenzt. Zwischen der (gemeinsamen) inneren Stirnwand und jeder äußeren Stirnwand erstreckt sich in axialer Richtung eine jeweils zugeordnete Mantelwand.

Der Fachmann wird verstehen, dass sich Begriffe, die allgemeine Relativausrichtungen oder -positionierungen bezeichnen, wie "neben", "unter", "über" etc., sofern nichts anderes gesagt ist, stets auf die Montageendlage der Antriebsanordnung im Kraftfahrzeug beziehen. Entsprechendes gilt für absolute Ausrichtungsangeben wie z. B. "vertikal" und "horizontal". Symmetriespezifische Begriffe wie "axial", "radial" etc. sind stets im Kontext der jeweils beschriebenen Symmetrieeinheit zu verstehen.

Kühlung und Schmierung des Getriebes und der elektrischen Maschine erfolgen über ein gemeinsames, ölbasiertes Kühlsystem. Dieses umfasst ein Reservoir, von dem aus mittels einer Ölpumpe Öl abgezogen und in einen Ölverteilerkanal eingespeist wird. Der Ölverteilerkanal verläuft ein Stück weit in der gemeinsamen Stirnwand und verzweigt sich dann in zwei unterschiedliche Zweige. Der erste Zweig ist über eine Drehdurchführung mit dem Innenraum der als Hohlwelle ausgebildeten Rotorwelle verbunden. Der zweite Zweig mündet in den Getrieberaum. Das in die Rotorwelle eingespeiste Öl erfüllt dort zunächst die Funktion einer Rotorinnenkühlung. Über radiale Öffnungen beidseitig der elektrischen Maschine, d.h. in der Nähe der jeweiligen Stirnwand, kann das Öl den Rotorwellen-Innenraum verlassen und zwar bei Rotation der Welle in Form eines zentrifugalkraftgetriebenen, nach radial außen gerichteten Spritzens. Das Spritzöl benetzt die axial endständigen Bereiche von Rotor und Stator, insbesondere die dort angeordneten Stator-Wickelköpfe, die hierdurch ebenfalls gekühlt werden. Das vom Stator ablaufende Öl sammelt sich schwerkraftgetrieben am Boden des Motorraums, der einen Ablauf zu den übrigen Bereichen des Reservoirs aufweist. Auf diese Weise wird die Ausbildung eines Motorölsumpfes vermieden, der bei einem übermäßigen Anstieg seines Pegels zu einer den Wirkungsgrad der elektrischen Maschine nachteilig beeinflussenden Verölung des Luftspaltes zwischen Rotor und Stator führen könnte. Der zweite Zweig des Ölverteilerkanals mündet, wie bereits erwähnt, im Getrieberaum und durchbricht dabei insbesondere die innere Stirnwand auf Höhe der Verzahnung zwischen einem auf der Antriebswelle (Rotorwelle) angeordneten Antriebsritzel und einem mit diesem kämmenden Ausgangsrad. Der Wandungsdurchbruch, d.h. die Kanalmündung, liegt dabei in axialer Richtung so nahe an den miteinander kämmenden Rädern, dass der Druck der Ölpumpe ausreicht, den Verzahnungsbereich aktiv mit Öl zu bespritzen. Das schwerkraftgetrieben von den Rädern und den Getrieberaumwänden ablaufende Öl sammelt sich im unteren Bereich des Getrieberaumes, wo es einen niedrigen Getriebeölsumpf ausbildet, der einen Überlauf zu den übrigen Bereichen des Reservoirs aufweist. Die Drehdurchführung, über die der erste Zweig des Ölverteilerkanals an den hohlen Innenraum der Rotorwelle angeschlossen ist, muss aufgrund seines komplexen Aufbaus und seiner Verschleißanfälligkeit als nachteilig angesehen werden. Außerdem verringert die Drehdurchführung bzw. die zu deren Aufnahme entsprechend dick auszubildende innere Stirnwand den für die elektrische Maschine im Motorraum zur Verfügung stehenden Bauraum.

Die eingangs bereits erwähnte, gattungsbildende US 2020/0052534 A1 sieht vor, die hohle Rotorwelle an ihren beiden Stirnflächen jeweils mit einer zentralen Durchgangsöffnung zu versehen. Zugleich ist ein Ölverteilkanal im Inneren der Gehäusewandung, insbesondere im Inneren der äußeren Stirnwand, vorgesehen, der auf Höhe der zentralen Durchgangsöffnung der Rotorwelle die Gehäusewandung nach innen durchbricht und in ein Ölleitrohr übergeht, welche durch die jeweils zugeordnete Durchgangsöffnung in das Innere der Rotorwelle ragt. Um den Zugang zu der Durchgangsöffnung zu ermöglichen, ist auf der Innenseite der äußeren Stirnwand ein nach innen vorspringender Lagersockel, der das Rotorwellenlager trägt, angeordnet. Dieser Lagersockel weist in seinem Inneren einen Hohlraum auf, in dem sich die Durchgangsöffnung der Rotorwelle und das Ölleitrohr treffen. Diese Art der Öleinspeisung ins Innere der Rotorwelle ist konstruktiv deutliche einfacher als die vorerwähnte Drehdurchführung.

Die Vorrichtung der US 2019/0229582 A1 ist ähnlich gestaltet, wobei jedoch auf das Ölleitrohr verzichtet und der Hohlraum des Lagersockels mit Öl geflutet wird, sodass das Öl bei Erreichen eines bestimmten Pegels in die Rotorwelle hinein überfließt.

Ein konstruktiv einfacherer Ansatz ist aus der DE 10 2017 128 551 A1 bekannt. Hierzu ist der äußeren Stirnwand axial benachbart ein zusätzlicher Deckelraum vorgesehen. Die Rotorwelle durchsetzt mit ihrem dortigen Ende die äußere Stirnwand und ragt in besagten Deckelraum hinein. Ebenso öffnet sich ein in der Außenwand des Deckelraums geführter Ölleitkanal in das Innere des Deckelraums und geht dort in ein Ölleitrohr über, welches durch die zentrale Durchgangsöffnung in der im Deckelraum befindlichen Stirnfläche der Rotorwelle in diese hineinragt.

Auch die WO 2021/042466 A1 offenbart die axiale Einspeisung von Kühlöl in die hohle Rotorwelle, ohne dass jedoch konstruktive Details der Übergabe erkennbar wären.

Ein ganz anderes Kühlprinzip ist aus der US 2011/0285220 A1 bekannt. Hier wird der Stator der elektrischen Maschine gekühlt, indem entlang seiner oberen Scheitellinie Öl aus einem in der Mantelwand des Gehäuses verlegten Kanal auf den in Harz eingegossenen Stator getropft und in einem sich entlang der unteren Scheitellinie des Stators erstreckenden Ölsumpf aufgefangen wird. Das Öl läuft auch über seitliche Bereiche, in denen elektrische Anschlüsse das Harz durchsetzen. Diese erfahren dadurch ebenfalls eine Kühlung.

Es ist die Aufgabe der vorliegenden Erfindung, eine gattungsgemäße derart weiterzubilden, dass eine effizientere Nutzung des zur Verfügung stehenden Kühlöls resultiert.

Diese Aufgabe wird in Verbindung mit den Merkmalen des Oberbegriffs von Anspruch 1 dadurch gelöst, dass axial benachbart zu der äußeren Stirnwand des Motorraums ein Deckelraum als ein weiterer Raum des Gehäuses angeordnet ist, in welchen die die zentrale Durchgangsöffnung aufweisende Stirnfläche der Rotorwelle sowie das stromabwärtige Ende des ersten Zweiges des Ölverteilerkanals hineinragen, wobei der Deckelraum von Stromschienen durchsetzt ist und das Ölleitrohr beabstandet von seinem freien Ende seitliche Düsenöffnungen aufweist, durch welche Öl auf besagte Stromschienen spritzbar ist.

Zunächst sieht die Erfindung vor, benachbart zur äußeren Stirnseite des Motorraums einen zusätzlichen, hier als Deckelraum bezeichneten, aus dem Stand der Technik grundsätzlich bekannten Raum anzuordnen. Der Deckelraum kann zunächst, wie ebenfalls vorbekannt, als Auffangraum für Öl dienen, welches zur Schmierung des in der äußeren Motorraum-Stirnwand angeordneten Rotorwellenlagers genutzt wird und von dort teilweise nach außen dringt. Zudem erfährt dieser Deckelraum eine ebenfalls vorbekannte, zusätzliche Funktion, nämlich zur Unterbringung einer vorzugsweise berührungslosen, axialen Öleinspeisung in die hohle Rotorwelle. Hierzu weist die Rotorwelle in ihrer getriebeabgewandten Stirnseite, die in den Deckelraum hineinragt, eine zentrale Durchgangsöffnung auf. Das Innere der Rotorwelle ist daher vom Deckelraum her zugänglich. Außerdem ist vorgesehen, dass der erste Zweig des Ölverteilerkanals ebenfalls im Deckelraum mündet. Beide Öffnungen, d.h. die Ölverteilerkanal-Mündung einerseits und die zentrale Durchgangsöffnung in der Rotorwellen-Stirnfläche andererseits, sind über ein Ölleitrohr verbunden, welches einerseits fest an der Ölverteilerkanal-Mündung angeschlossen sein kann und andererseits in axialer Richtung, vorzugsweise in Form eines starren Rohrstutzens, in das Innere der Rotorwelle hineinragt. Die Ölpumpe fördert also Öl durch den ersten Zweig des Ölverteilerkanals zum Deckelraum, wo das Öl an das Ölleitrohr übergeben und in das Innere der Rotorwelle gefördert wird. Drehende Teile (Rotorwelle) und stehende Teile (Ölleitrohr) kontaktieren dabei einander vorzugsweise nicht. Entsprechend sind keine Dichtungen zwischen drehenden und stehenden Teilen erforderlich. Dies vereinfacht den Aufbau der Ölübergabestelle zur Rotorwelle erheblich und stellt vor allem eine verschleißfreie Lösung dar. Der Rohrstutzen kann an seinem Ende eine axiale Öffnung haben, sodass Öl mit axialer Spritzrichtung in die Rotorwelle gefördert wird. Alternativ oder zusätzlich können radiale oder schräge Öffnungen im Rohrstutzen vorgesehen sein, sodass das Öl mit radialer oder schräger Spritzrichtung in die Rotorwelle gefördert wird.

Um zu gewährleisten, dass sich das in die Rotorwelle geförderte Öl über die gesamte Länge der Rotorwelle verteilt und nicht etwa um den nicht abgedichteten Rohrstutzen des Ölleitrohres herum unverzüglich wieder zurück in den Deckelraum austritt, ist bevorzugt vorgesehen, dass sich die lichte Weite der Durchgangsöffnung stufenweise zur größeren lichten Weite des Innenraums der Rotorwelle erweitert, wobei das Ölleitrohr wenigstens eine Stufe (vorzugsweise wenigstens eine von mehreren Stufen) in axialer Richtung überragt. Bei hinreichend hohem Öldruck kann besagte Stufe alternativ auch im Freistrahl überwunden werden. Durch die Stufe wird sichergestellt, dass sich in der Rotorwelle ein Ölsumpf ausbilden kann, der erst bei Erreichung eines vergleichsweise hohen Pegels die Kante der Durchgangsöffnung in der Rotorwellen-Stirnfläche übersteigt und in den Deckelraum austreten kann. Je nach Relativdimensionierung von lichter Weite der Durchgangsöffnung und Innenraum der Rotorwelle kann auf diese Weise sichergestellt werden, dass in der Rotorwelle stets ein für die Rotorkühlung ausreichendes Ölvolumen vorhanden ist.

Das oben geschilderte Szenario eines Austritts von Öl aus der Durchgangsöffnung der Rotorwellen-Stirnfläche in den Deckelraum ist allerdings bei der bevorzugten Ausgestaltung der Erfindung unwahrscheinlich. Hier ist nämlich vorgesehen, dass die hohle Rotorwelle in ihren stirnwandnahen, axialen Endbereichen innerhalb des Motorraums Radialöffnungen aufweist, durch die hindurch bei Rotation des Rotors Öl aus dem hohlen Inneren der Rotorwelle auf die axialen Endbereiche des Stators schleuderbar ist bzw. geschleudert wird. Das Öl wird daher zum überwiegenden Teil den Innenraum der Rotorwelle über besagte Radialöffnungen verlassen und dabei auch den Stator, insbesondere dessen Wickelköpfe, kühlen. Von dort sammelt es sich im Motorraum und fließt in weitere Bereiche des Reservoirs ab. Beispielsweise kann ein Notüberlauf zum Getrieberaum vorgesehen sein, mit dem sichergestellt wird, dass sich im Motorraum kein Motorölsumpf ausbildet, der zu einer Verölung des Luftspaltes führen könnte.

Erfindungsgemäß ist der Deckelraum von Stromschienen, bspw. denjenigen einer Leistungselektronik, durchsetzt und das Ölleitrohr weist beabstandet von seinem freien Ende seitliche Düsenöffnungen auf, durch welche Öl auf besagte Stromschienen spritzbar ist. Die Stromschienen werden also von dem Öl, welches bei Betrieb der Ölpumpe durch die Düsenöffnungen des Ölleitrohres gespritzt wird, benetzt. Auch diese Stromschienen erfahren dadurch eine effektive Kühlung und zwar an einer Stelle, wo keine Verölung der zugeordneten Leistungselektronik zu befürchten ist. Hierzu müssen die Stromschienen lediglich in gedichteter Weise von einem ölfreien Leistungselektronikraum auf ihrem Weg zum Stator, mit dem sie elektrisch verbunden sein müssen, über den Deckelraum geführt werden.

Das Ölleitrohr ist im Deckelraum verschiedenen Kräften ausgesetzt. Neben den Vibrationen und Beschleunigungskräften, denen bei Fahrbetrieb die Antriebsanordnung als Ganzes ausgesetzt ist, führen die vorteilhafterweise vorgesehenen Düsenöffnungen zu Rückstoßkräften. Da das Ölleitrohr allerdings vorzugsweise eine vergleichsweise filigrane Struktur darstellt, die solchen Kräften nachgeben könnte, ist es vorteilhaft, für das Ölleitrohr eine eigene Fixierung im Deckelraum vorzusehen. Bei einer entsprechenden Ausgestaltung der Erfindung ist daher das freie Ende des Ölleitrohres als ein Rohrstutzen ausgebildet, der sich in axialer Richtung aus dem Zentrum eines Fixiersterns mit einer Mehrzahl radial erstreckter Auslegerarme erstreckt, welche an ihren freien Enden an der äußeren Stirnwand des Motorraums festgelegt sind. Dies bedeutet, dass der freie Endbereich des Ölleitrohres, der zur Vermeidung von Berührungen mit der rotierenden Rotorwelle besonders starr gehaltert sein sollte, mit einem spinnenförmigen Fixierstern an der äußeren Motorraum-Stirnwand, vorzugsweise symmetrisch um die Rotorwelle herum festgelegt ist.

Wie eingangs erläutert, macht der in das Ölleitrohr mündende erste Zweig nur einen von zwei Zweigen des von der Ölpumpe beschickten Ölverteilerkanals aus. Sein zweiter Zweig mündet, wie bereits erwähnt, in den Getrieberaum. Um die internen Strukturen des Gehäuses, insbesondere die innere Stirnwand, besonders filigran und daher bauraumsparend gestalten zu können, ist bevorzugt vorgesehen, dass sich die beiden Zweige des Ölverteilerkanals von einer Verzweigungsstelle aus in entgegengesetzten Richtungen parallel zur Axialrichtung der elektrischen Maschine erstrecken. Dies kann insbesondere im Zwickel zwischen der Außenseite der Motorraum-Mantelwand und einem unter dem Motorraum gelegenen Reservoir-Raum erfolgen. Dies stellt eine günstige Nutzung "verlorenen" Raumes dar, ohne dass für andere Funktionen optimierte Strukturen modifiziert werden müssten. Dieser Gehäusebereich lässt sich von der Ölpumpe aus gut durch eine Zuleitung erreichen, die sich senkrecht zur Axialrichtung der elektrischen Maschine erstreckt und von der Ölpumpe zu der Verzweigungsstelle führt.

Allerdings führt die Ausrichtung der beiden Ölverteilerkanal-Zweige parallel zur Axialerstreckung der elektrischen Maschine dazu, dass die Mündungsstellen des ersten Kanals im Deckelraum und des zweiten Kanals im Getrieberaum auf gleicher Höhe liegen. Dies könnte die Gefahr begründen, zu viel Öl über den zweiten Zweig direkt in den Getrieberaum und zu wenig Öl über den ersten Zweig in den Deckelraum bzw. über das Ölleitrohr in die Rotorwelle zu pumpen. Um dem entgegenzuwirken, ist bei einer vorteilhaften Ausgestaltung der Erfindung vorgesehen, dass im zweiten Zweig des Ölverteilerkanals eine Verengungsblende angeordnet ist. Diese begrenzt den Volumenstrom in den Getrieberaum, sodass der überwiegende Anteil des Öls durch den nicht verengten zweiten Zweig in das Ölleitrohr und die Rotorwelle gepumpt wird.

In Strömungsrichtung vor besagter Verengungsblende bildet sich daher ein Beruhigungsbereich für das Öl, in welchem ggf. mitgeführter Abrieb absinkt. Um diesen Abrieb hier, d.h. an einer nicht störenden Stelle, dauerhaft zu fixieren, kann, wie vorzugsweise vorgesehen, stromaufwärts benachbart zu, insbesondere vor der Verengungsblende ein Magnet, insbesondere ein Ringmagnet, im zweiten Zweig des Ölverteilerkanals angeordnet sein. Dieser fixiert den absinkenden bzw. vorbeiströmenden metallischen Abrieb dauerhaft. Ggf. kann der Ringmagnet austauschbar gestaltet sein, sodass bei Wartungsarbeiten durch Austausch des Magneten eine Reinigung des Gesamtsystems von Abrieb erfolgen kann.

Weitere Einzelheiten und Vorteile der Erfindung ergeben sich aus der nachfolgenden, speziellen Beschreibung und den Zeichnungen.

Es zeigen:
- Figur 1:: einen stark schematisierten Längsschnitt durch eine bevorzugte Ausführungsform einer nicht erfindungsgemäßen Antriebsanordnung,
- Figur 2:: eine Schnittdarstellung gemäß Schnittlinie II-II in Figur 1,
- Figur 3:: eine Schnittdarstellung gemäß Schnittlinie III-III in Figur 1,
- Figur 4:: eine Schnittdarstellung analog Figur 3 durch eine alternative Ausführungsform,
- Figur 5:: eine zu Figur 1 analoge Schnittdarstellung durch eine weitere alternative Ausführungsform,
- Figur 6:: eine Schnittdarstellung gemäß Schnittlinie VI-VI in Figur 5,
- Figur 7:: eine teilweise geschnittene Darstellung einer erfindungsgemäßen Ausführungsform,
- Figur 8:: eine Schnittdarstellung gemäß Schnittlinie VIII-VIII in Figur 7,
- Figur 9:: eine schematische Darstellung des Ölbehälters zur Veranschaulichung seiner Position im Getriebe,
- Figur 10:: eine Schnittdarstellung des Ölbehälters von Figur 9 mit eingezeichnetem Starkströmungsweg,
- Figur 11:: eine Schnittdarstellung des Ölbehälters von Figur 9 mit eingezeichnetem Schwachströmungsweg sowie
- Figur 12:: eine umgekehrte Schnittdarstellung des Ölbehälters von Figur 9.

Gleiche Bezugszeichen in den Figuren weisen auf gleiche oder analoge Elemente hin.

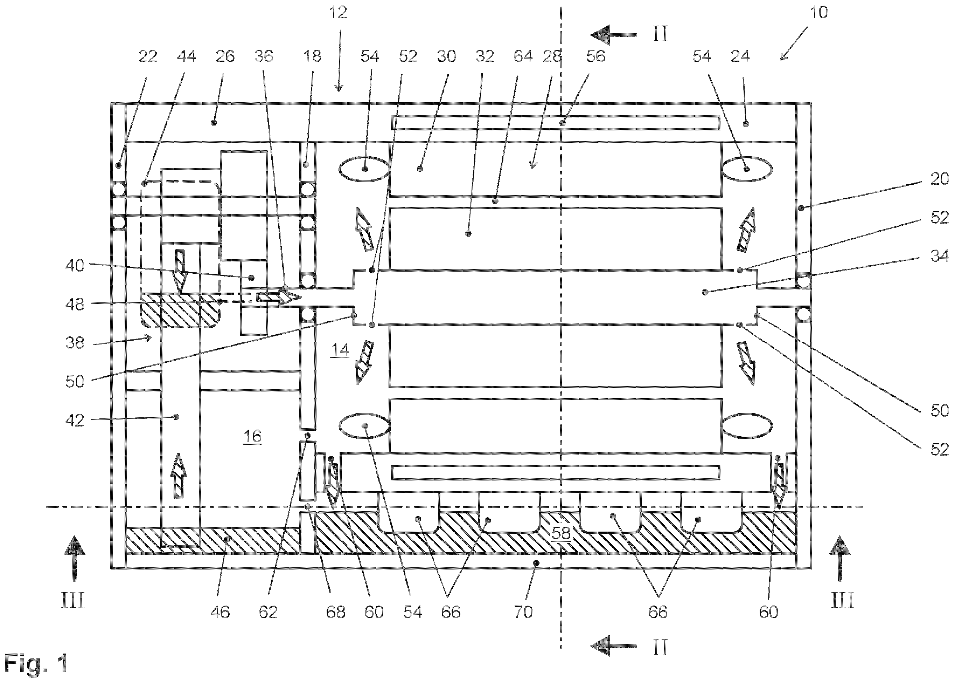

Figur 1 zeigt in stark schematisierter Darstellung einen Längsschnitt durch eine nicht erfindungsgemäße Antriebsanordnung 10. Die Antriebsanordnung 10 umfasst ein Gehäuse 12, welches in einen Motorraum 14 und einen Getrieberaum 16 unterteilt ist. Der Motorraum 14 und der Getrieberaum 16 sind einander axial benachbart angeordnet. Sie sind durch eine hier als innere Stirnwand 18 bezeichnete Zwischenwand voneinander getrennt. Der inneren Stirnwand 18 in axialer Richtung gegenüberliegend ist der Motorraum 14 durch eine äußere (Motorraum-)Stirnwand 20 und der Getrieberaum 16 durch eine äußere (Getrieberaum-)Stirnwand 22 begrenzt. In radialer Richtung ist der Motorraum 14 durch eine (Motorraum-)Mantelwand 24 und der Getrieberaum 16 durch eine (Getrieberaum-)Mantelwand 26 begrenzt.

Im Motorraum 14 ist eine elektrische Maschine 28 mit einem gehäusefesten Stator 30 und einem innerhalb des Stators 30 rotierbaren Rotor 32 angeordnet. Der Rotor 32 weist eine Rotorwelle 34 auf, die einerseits in der inneren Stirnwand 18 und andererseits in der äußeren Motorraum-Stirnwand 20 gelagert ist. Die Rotorwelle 34 ist - zumindest in ihrem zentralen Bereich - hohl ausgebildet. Die Rotorwelle 34 durchsetzt dabei die innere Stirnwand 18, um als Antriebswelle 36 in den Getrieberaum 16 zu ragen. Alternativ ist es auch möglich, dass die Antriebswelle 36 eine gesonderte, koaxial mit der Rotorwelle 34 verbundene Welle ist.

Im Getrieberaum 16 ist ein Getriebe 38, insbesondere ein Übersetzungsgetriebe angeordnet. Als Eingangsrad des Getriebes 38 wirkt ein Antriebsritzel 40, welches drehfest auf der Antriebswelle 36 fixiert ist. Der Begriff des Ritzels ist weit zu verstehen und umfasst sowohl ein auf ein Welle aufgestecktes Rad als auch eine einstückig mit der Welle ausgebildete Verzahnung. Dieses steht über mehrere Verzahnungsstufen mit einem Ausgangsrad 42 in drehmomentübertragender Verbindung. Das Ausgangsrad 42 ist in nicht näher dargestellter Weise mit einem Abtrieb, insbesondere einem Differenzialgetriebe gekoppelt.

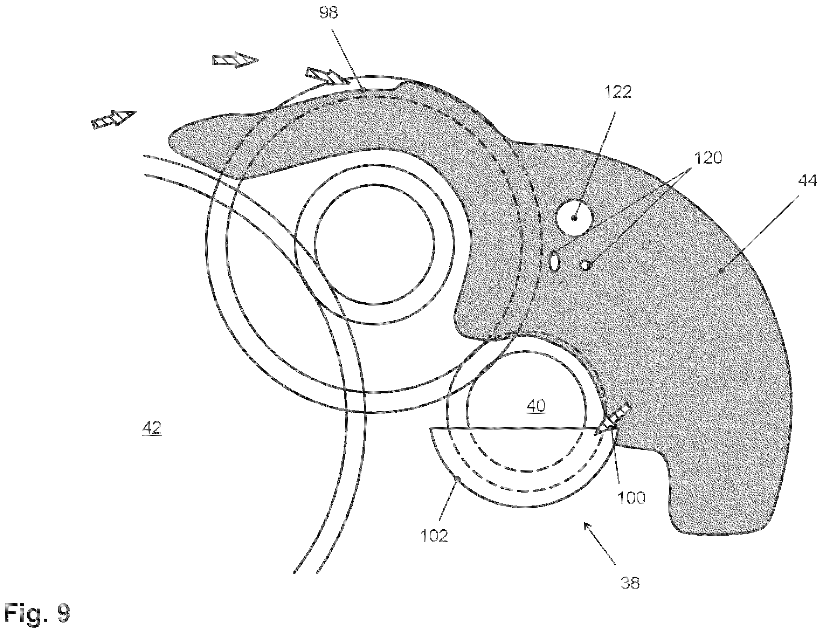

Weiter ist im Getrieberaum 16 ein Ölbehälter 44 angeordnet, auf dessen spezielle Gestaltung weiter unten im Kontext der Figuren 9 bis 14 noch näher eingegangen werden soll.

Im unteren Bereich des Getrieberaums 16 befindet sich ein Getriebeölsumpf 46, in welchen der untere Bereich des Ausgangsrades 42 von oben hineinragt. Bei Rotation nimmt seine Verzahnung Öl aus dem Getriebeölsumpf 46 auf und wirft es in den Ölbehälter 44. Diesen verlässt das Öl wenigstens teilweise über einen Rotorwellen-Auslass 48 und strömt über eine entsprechende Ölleitung in die hohle Rotorwelle 34.

Die hohle Rotorwelle 34 ist beidseitig mit einer Stufe 50 versehen, die die Ausbildung eines Ölsumpfes innerhalb der hohlen Rotorwelle 34 und damit eine Verteilung des Öls über deren axiale Länge grundsätzlich erlaubt. Allerdings kann das Öl die hohle Rotorwelle 34 über Radialöffnungen 52 verlassen. Bei Rotation der Rotorwelle 34 erfolgt dies zentrifugalkraftgetrieben in Form eines Schleuderns des Öls, welches auf diese Weise bei korrekter Positionierung der Radialöffnungen 52 zu den Wickelköpfen 54 des Stators 30 gelangt.

Der beschriebene und nachfolgend noch näher zu beschreibende Weg, den das Öl dabei nimmt, ist in den Figuren als schraffierte Ölförderpfeile angedeutet.

Bei der dargestellten Ausführungsform ist in die Mantelwand 24 des Motorraums 14 ein Kühlwassermantel 56 integriert. Bei der dargestellten Ausführungsform ist er in Form einer Anordnung von im Inneren der Motorraum-Mantelwand 24 umlaufenden Flachrohren ausgebildet. Die Anschlüsse des Kühlwassermantels 56 an ein komplexeres Wasserleitsystem sind als nicht erfindungsrelevant in den Figuren nicht näher dargestellt.

Unterhalb des Motorraums 14 befindet sich, getrennt durch den unteren Teil der Motorraum-Mantelwand 24, ein Labyrinthraum 58, der über Motorraum-Abläufe 60, mit dem Motorraum 14 verbunden ist. Insbesondere kann das auf dem oben geschilderten Weg in den Motorraum 14 gelangte Öl über die Motorraumabläufe 60 in den Labyrinthraum 58 abfließen, ohne dass die Gefahr der Ausbildung eines übermäßig hohen Motorölsumpfes bestünde. Aus Sicherheitsgründen kann, wie in der dargestellten Ausführungsform, vorgesehen sein, dass der Motorraum 14 zusätzlich über einen Motorraum-Überlauf 62 mit dem Getrieberaum 16, insbesondere dem Getriebeölsumpf 46 verbunden ist. Auf diese Weise kann zuverlässig eine Verölung des Luftspaltes 64 zwischen dem Stator 30 und dem Rotor 32 der elektrischen Maschine 28 verhindert werden.

Der Deckel des Labyrinthraums 58, d.h. die Außenseite des unteren Bereichs der Motorraum-Mantelwand 24, ist mit Kühlrippen 66 versehen, die hinreichend tief in den Labyrinthraum 58 hineinragen, um dort von aufgestautem Öl umspült zu werden. Bei einer alternativen Ausführungsform ist die thermische Kopplung zwischen dem Öl im Labyrinthraum 58 und dem Kühlwassermantel 56 nicht nur über die Kühlrippen 66 gegeben, sondern die Motorraum-Mantelwand 24 ragt tiefer in den Labyrinthraum 58 hinein und wird direkt von dem Öl benetzt. Die maximale Höhe des Ölpegels im Labyrinthraum 58 bestimmt sich durch die Höhe eines Labyrinthraum-Überlaufs 68, über welchen der Labyrinthraum 58 mit dem Getrieberaum 16, insbesondere dem Getriebeölsumpf 46 verbunden ist. Über die Kühlrippen 66 kann auf diese Weise ein Wärmeaustausch zwischen dem Kühlwassermantel 56 und dem im Labyrinthraum 58 befindlichen Öl erfolgen, wobei das Öl eine weitere Kühlung dadurch erhält, dass der Boden 70 des Labyrinthraums 58 eine Außenwandung des Gehäuses 12 darstellt, die ihrerseits von Umgebungsluft umströmt wird. Auf diese Weise wir eine besonders effiziente Kühlung des Öls und des Wassers erreicht.

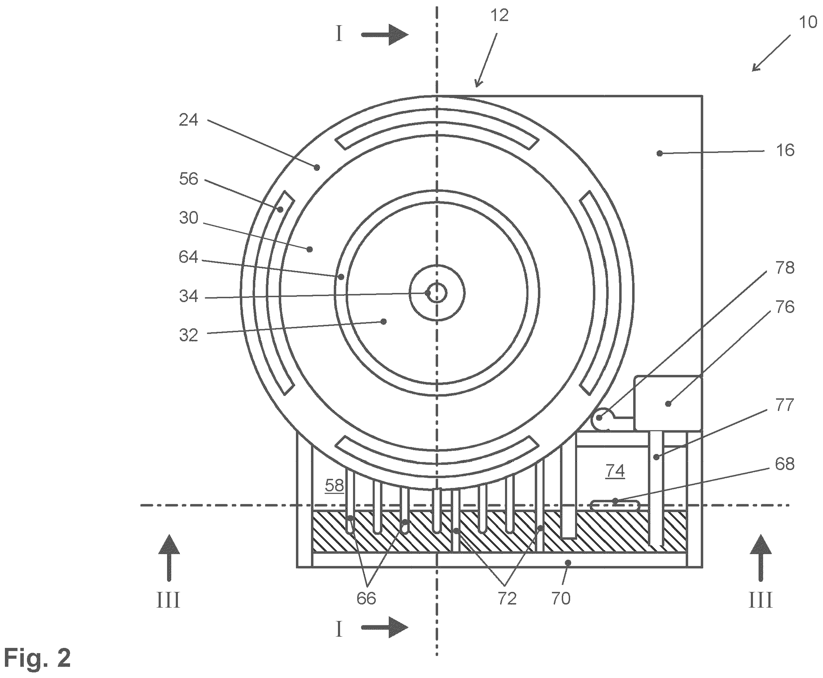

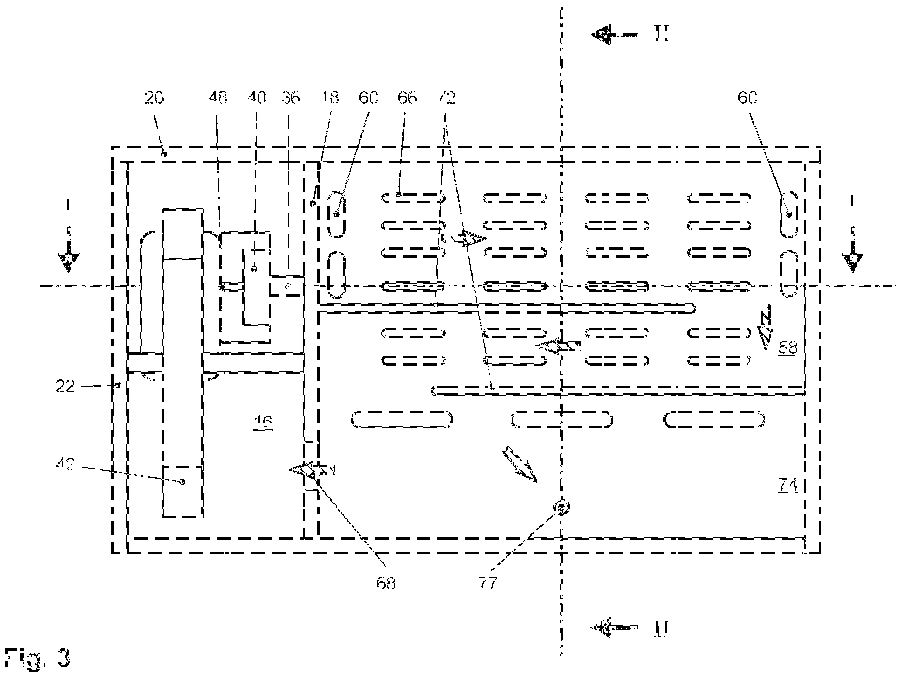

Figur 2 zeigt einen Schnitt entlang der Schnittlinie II-II in Figur 1. Figur 3 zeigt einen Schnitt entlang der Schnittlinie III-III in Figur 1. Diese beiden Darstellungen verdeutlichen, dass der Labyrinthraum 58 mehrere, seine gesamte Höhe durchsetzende Ölleitelemente 72 aufweist, welche das durch die Motorraumabläufe 60 einströmende Öl zu einer mäandrierenden Bewegung zwingen. Hierdurch wir der thermische Kontakt mit den Kühlrippen 66 intensiviert und damit der thermische Austausch verbessert.

Weiter ist in den Figuren 2 und 3 zu erkennen, dass der Labyrinthraum 58 in einen Saugraum 74 einer Ölpumpe 76, deren Saugrüssel 77 in den Saugraum 76 ragt, übergeht. Von hier aus kann Öl bei aktivem Pumpbetrieb an verschiedene schmier- und kühlbedürftige Positionen der Antriebsanordnung 10 gepumpt werden. In Figur 2 ist ein entsprechender, mit der Ölpumpe 76 verbundener Ölverteilerkanal 78 erkennbar, auf den weiter unten noch näher eingegangen werden soll.

Im Übrigen kann überschüssiges Öl aus dem Labyrinthraum 58 bzw. dem Saugraum 74 über den Labyrinthraum-Überlauf 68 in den Getrieberaum 16 und insbesondere den dortigen Getriebeölsumpf 46 gelangen.

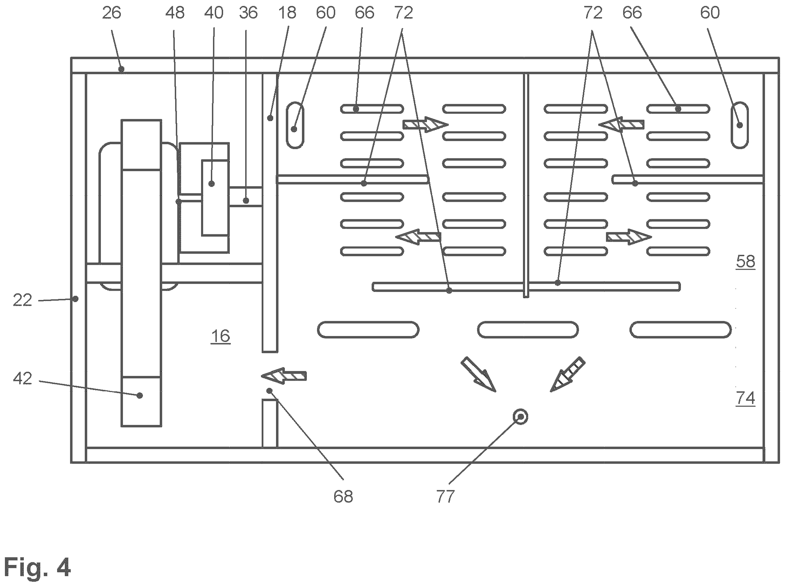

Bei der Ausführungsform von Figur 3 umfasst der Labyrinthraum 58 im Wesentlichen eine einzige Labyrinthraumkammer, in welche beide Motorraum-Abläufe 60 münden. Dies bedeutet, dass Öl, welches aus dem in Figur 3 linken Motorraum-Ablauf 60 in den Labyrinthraum 58 gelangt, am in Figur 3 rechten Motorraum-Ablauf 60 vorbeiströmt und sich dort mit dem durch diesen einströmenden Öl mischt. Hinsichtlich der Dimensionierung muss Sorge getragen werden, dass es bei großen Volumenströmen an dieser Stelle auch in besonders ungünstigen Situationen nicht zu einem Ölstau kommt. Um dies vollständig auszuschließen, ist bei einer Ausführungsform, wie beispielweise in Figur 4 gezeigt, vorgesehen, dass der Labyrinthraum in zwei unterschiedliche Labyrinthraumkammern unterteilt ist, in die je einer der Motorraum-Abläufe 60 mündet. Im Übrigen kann vollumfänglich auf das zuvor Gesagte verwiesen werden.

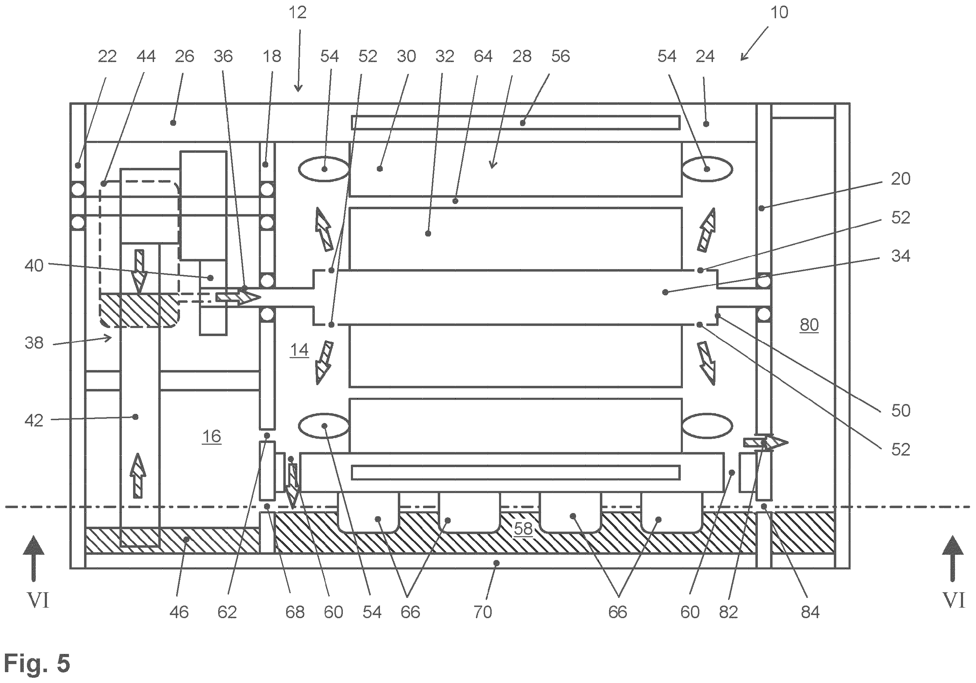

Figur 5 zeigt eine analog Figur 1 aufgebaute Darstellung einer alternativen Ausführungsform der Antriebsanordnung 10. Bei dieser Ausführungsform schließt sich axial benachbart zur äußeren Stirnseite 20 des Motorraums 14, d.h. rechts in Figur 5, ein Deckelraum 80 an, dessen Aufgabe es primär ist, durch die äußere Stirnwand 20 dringendes Öl aufzufangen. Insbesondere wird es nur schwer möglich sein, eine (in den Figuren nicht im Detail dargestellte) Beölung des Rotorwellenlagers in der äußeren Motorraum-Stirnwand 20 sicherzustellen, ohne dass Öl durch das Lager nach außerhalb des Motorraums 14 tritt. Dieses Öl kann im Deckelraum 80 aufgefangen und in der nachfolgend näher erläuterten Weise wieder in den zuvor beschriebenen Ölkreislauf rückgeführt werden. Zudem bietet das Vorhandensein des Deckelraums 80 die Möglichkeit einer gezielten weiteren Nutzung.

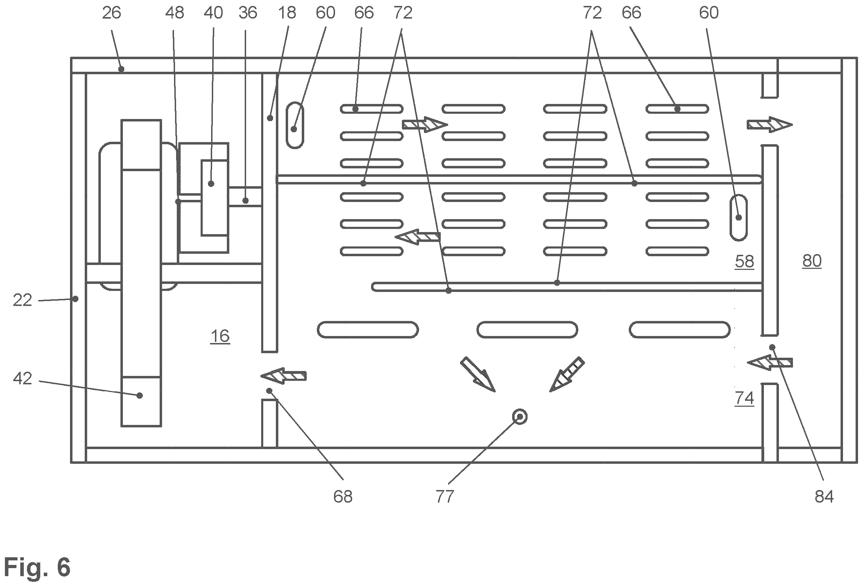

So ist bei der Ausführungsform von Figur 5 vorgesehen, dass die äußere Motorraum-Stirnwand 20 analog dem Motorraum-Überlauf 62 in der inneren Stirnwand 18 ein weiterer Motorraum-Überlauf 82 befindet, über den Öl aus dem Motorraum 14 in den Deckelraum 80 gelangen kann. Bei der gezeigten Ausführungsform ist der Deckelraum 80 über einen Labyrinthraum-Überlauf 84 mit dem Öl-Reservoir, insbesondere einem dem Labyrinthraum 58 nachgelagerten Vorraum, z.B. dem Saugraum 74, verbunden. Wie in Figur 6 gezeigt, kann dabei, ähnlich der in Figur 4 gezeigten Ausführungsform, der Labyrinthraum 58 in zwei Kammern unterteilt sein.. Das durch den getrieberaumseitigen Motorraum-Ablauf 60 in den Labyrinthraum 58 fließende Öl durchströmt bei dieser Ausführungsform nur eine, nämlich die in Figur 6 obere Labyrinthraum-Kammer und umläuft dann durch den Deckelraum 80 die zweite, in Figur 6 untere Labyrinthraum-Kammer. Das durch den deckelraumseitigen Motorraum-Ablauf 60 in den Labyrinthraum 58 fließende Öl hingegen durchströmt nur die andere, nämlich die in Figur 6 untere Labyrinthraum-Kammer. Beide Ölströme vereinigen sich erst in einem dem Labyrinthraum nachgelagerten Raum, z.B. dem Saugraum 74. Ein Ölstau im Labyrinthraum wird dadurch zuverlässig vermieden. Diese Form der Ölumleitung ist auch bei Varianten ohne Deckelraum 80 denkbar. Hier könnten der Ablauf aus der (oberen) Labyrinthraum-Kammer und der Zulauf zum Saugraum über eine entsprechende Leitung verbunden sein. Ebenso ist es denkbar, dass der weitere Motorraum-Überlauf 82 den deckelraumseitigen Motorraum-Ablauf 60 ersetzt.

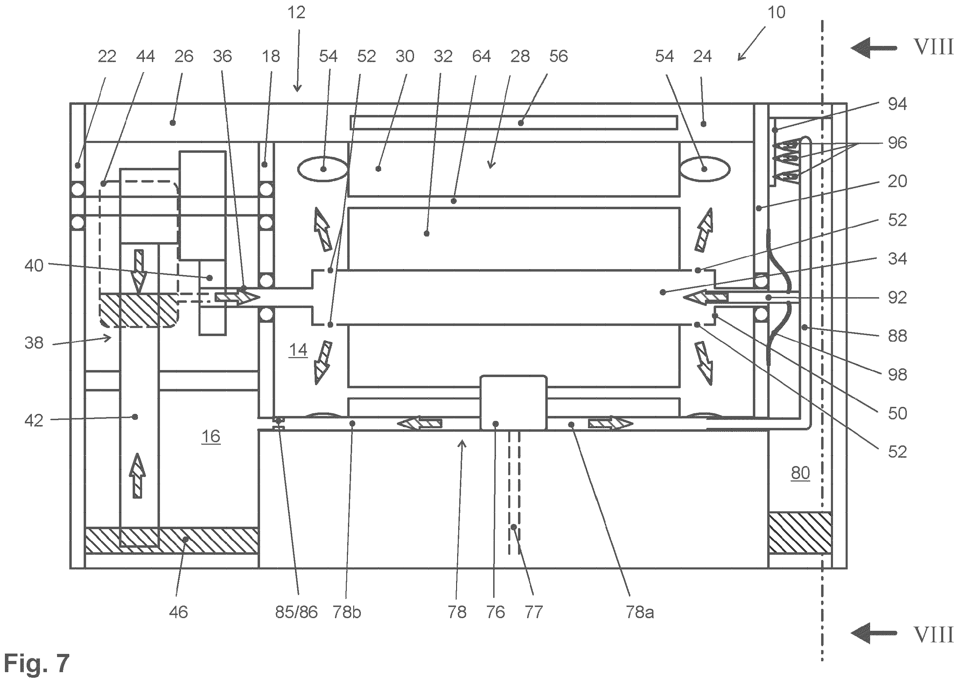

Figur 7 zeigt eine erfindungsgemäße Ausführungsform, bei der der Deckelraum 80 eine alternative oder zusätzliche Nutzung erfährt. Dieser Ausführungsform-Typus setzt zwingend eine Ölpumpe 76 voraus, die Öl aus dem Ölreservoir, insbesondere aus dem Saugraum 74, Öl absaugt und in einen Ölverteilerkanal 78 einspeist. Bei der in Figur 7 dargestellten Ausführungsform verläuft der Ölverteilerkanal 78, wie in Figur 2 erkennbar, im Zwickel zwischen der Motorraum-Mantelwand 24 und dem Deckel des Saugraums 74. Er ist bei der dargestellten Ausführungsform insbesondere in zwei gegenläufige Zweige 78a, 78b unterteilt. Der hier als zweiter Zweig 78b bezeichnete, in Figur 7 linke Zweig des Ölverteilerkanals 78 mündet in den Getrieberaum 16, wobei er eine Verengungsblende 85 passiert, um einen zu starken Abstrom in den Getrieberaum 16 zu verhindern. Der überwiegende Anteil des gepumpten Öls wird daher, wie nachfolgend näher beschreiben, über den ersten Zweig 78a des Ölverteilerkanals abgeführt. Die Verengungsblende 85 im zweiten Zweig 78b des Ölverteilerkanals 78 ist bevorzugt mit einem Magneten 86, insbesondere einem Ringmagneten stromaufwärts benachbart zu ihr ausgestattet, um metallischen Abrieb aus dem Ölkreislauf zu entfernen.

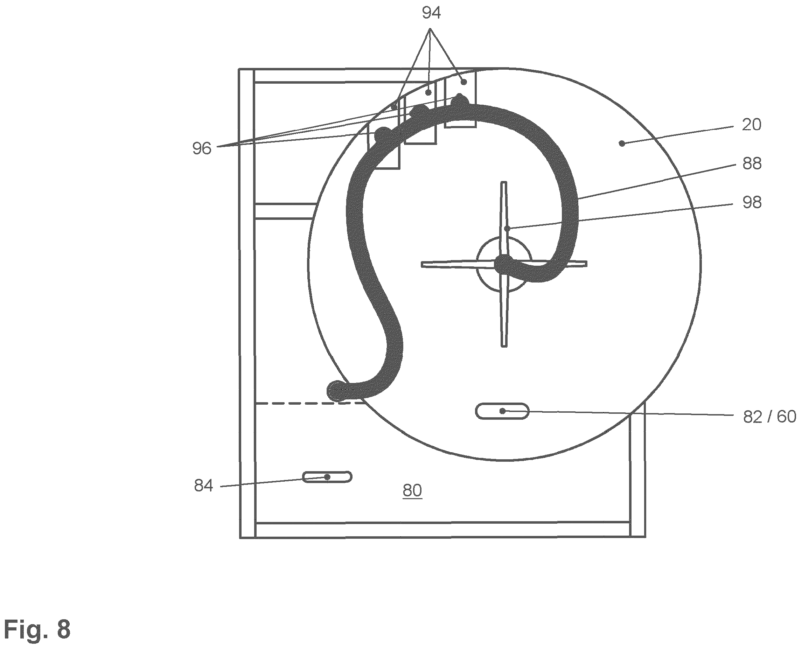

Der erste Zweig 78a des Ölverteilerkanals 78 mündet in den Deckelraum 80, wo an seinem freien Ende ein Ölleitrohr 88 angeschlossen ist. Figur 8 zeigt eine Schnittansicht gemäß Schnittlinie VIII-VIII in Figur 7 und soll nachfolgend gemeinsam mit Figur 7 diskutiert werden. Das Ölleitrohr 88 führt in einem Bogen zu einem Fixierstern 98, der mit seinen Auslegern an der Außenseite der äußeren Motorraum-Stirnwand 20 festgelegt ist. In seinem Zentrum fixiert er ein als Rohrstutzen 92 ausgebildetes Ende des Ölleitrohrs 88, welches in das offene Ende der hohlen Rotorwelle 34 hineinragt. Wie auch an ihrem getrieberaumseitigen Ende ist die hohle Rotorwelle 34 in ihrem Inneren auch hier mit einer Stufe 50 ausgestattet, über welche der Rohrstutzen 92 axial hinüberragt. Folglich wird Öl, das über den zweiten Zweig 78a des Ölverteilerkanals 78 gepumpt wird, direkt in den Innenraum der Rotorwelle 34 gepumpt, wo es zum Aufbau des dortigen Ölsumpfes beiträgt. Bezüglich des weiteren Ölflusses wird auf die obigen Erläuterungen, insbesondere im Kontext von Figur 1 verwiesen.

Bei der in den Figuren 7 und 8 dargestellten Ausführungsformen erfüllt das Ölleitrohr 88 jedoch noch eine weitere Aufgabe. Bei dieser Ausführungsform sind Stromschienen 94 zur Bestromung des Stators 30 abschnittsweise durch den Deckelraum 80 geführt. Das Ölleitrohr 88 beschreibt im Deckelraum 80 einen Bogen, der es nahe an diesen Stromschienen 94 vorbeiführt. Im Bereich der größten Annäherung weist die Seitenwand des Ölleitrohres 88 Düsenöffnungen 96 auf, aus denen Öl auf die Stromschienen gespritzt wird, um diese zu kühlen. Die Dimensionierung der Düsenöffnungen 96 erfolgt, wie der Fachmann erkennen wird, vorzugsweise so, dass bei dem von der Ölpumpe 76 vorgegebenen Öldruck im Ölleitrohr 88 eine kontinuierliche, hinreichende Spülung der Stromschienen 96 erfolgen kann, wobei jedoch noch genug Öl im Ölleitrohr 88 verbleibt, um in die hohle Rotorwelle 34 zu deren Kühlung gepumpt zu werden.

Figur 9 zeigt eine besonders bevorzugte Ausführungsform des Ölbehälters 44 in seiner Montageendlage im Getriebe 38. Von letzterem sind vorliegend insbesondere das Antriebsritzel 40 und das Ausgangsrad 42 von Bedeutung.

Wie im Kontext von Figur 1 beschreiben, ist das Ausgangsrad 42 in einen in Figur 9 nicht dargestellten Getriebeölsumpf 46 eingetaucht, sodass seine Verzahnung bei Rotation Öl aufnimmt und, wie durch die schraffierten Ölförderpfeile illustriert, in eine Einlassöffnung 98 geworfen wird. Der Ölbehälter 44 weist in seiner Seitenwand eine Mehrzahl von Abflüssen auf, auf die weiter unten noch näher eingegangen werden soll. Hier soll lediglich auf den mit einem Ölförderpfeil markierten Getriebeölsumpf-Auslass 100 hingewiesen werden, der einen Ablauf von Öl aus dem Ölbehälter 44 in eine Antriebsritzel-Wanne 102 erlaubt. Die Antriebsritzel-Wanne 102 ist unterhalb des Antriebsritzels 40 so angeordnet, dass dieses bereichsweise in sie eintaucht, sodass sein unterer Bereich von einem in der Antriebsritzel-Wanne aufgestauten Ölsumpf benetzt ist. Der Getriebeölsumpf-Auslass 100 stellt den tiefstgelegenen Ölauslass des Ölbehälters 44 dar, der dessen maximales Entleeren in den Getriebeölsumpf auf dem Weg über die zum Getriebeölsumpf 46 hin überlaufende Antriebsritzel-Wanne 102 ermöglicht. Hierdurch ist dafür gesorgt, dass auch nach langen Standzeiten das Antriebsritzel 40 wenigstens bereichsweise beölt bleibt, sodass eine verschleißmindernde Beölung sämtlicher Verzahnungen des Getriebes 38 in kürzester Zeit nach dem Neustart der Antriebsanordnung einsetzt.

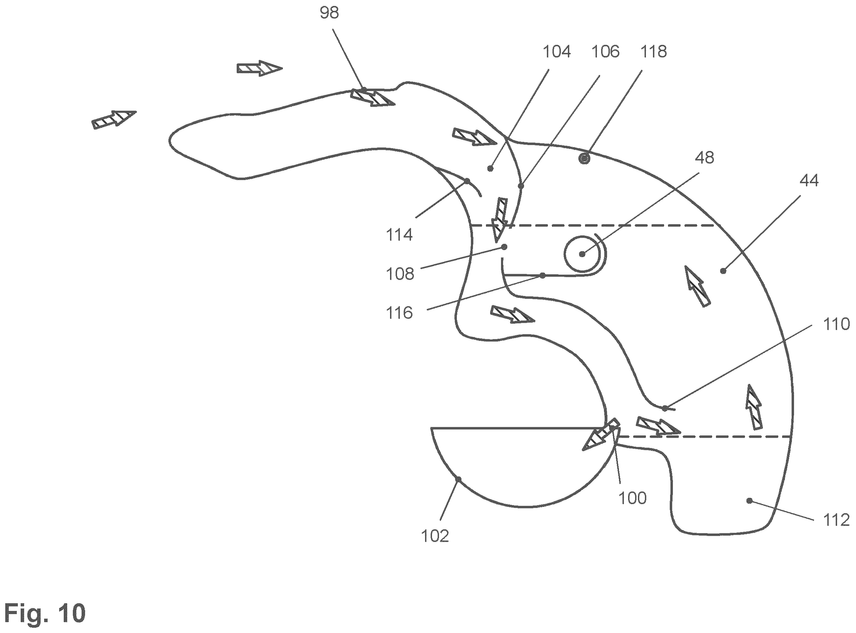

Figur 10 zeigt einen Schnitt durch den Ölbehälter 44 von Figur 9 im hier als Starkströmungsbetrieb bezeichneten Normalbetrieb. Insbesondere ist die Innenseite der Behälterwand des Ölbehälters 44 mit Blickrichtung aus dem Motorraum illustriert. Die Einlassöffnung 98 geht in einen Einlasskanal 104 über, der im Wesentlichen vertikal orientiert ist. Seine der Einlassöffnung 98 gegenüberliegende Kanalwand ist als eine konkav gekrümmte Prallwand 106 ausgebildet, gegen welche im Starkströmungsbetrieb eingeschleudertes Öl prallt und in vergleichsweise starkem Strom nach unten abfließt. Durch eine weiter unten noch näher diskutierte Durchlassöffnung 108 in der Prallwand 106 fließt lediglich ein geringer Anteil dieses Öl-Hauptstroms ab. Der hauptsächliche Anteil des Ölstroms umströmt das untere freie Ende 110 der Prallwand 106 und steigt hinter ihr wieder auf. Insbesondere bei Erreichen eines Ölpegels entsprechend der in Figur 10 oberen gestrichelten Pegellinie kann Öl durch den Rotorwellen-Auslass 48 in der Wand des Ölbehälters 44 nach außen und über eine entsprechend angeschlossene Leitung ins Innere der hohlen Rotorwelle 34 strömen, wie bereits im Kontext von Figur 1 erläutert. Zugleich kann Öl durch den Getriebeölsumpf-Auslass 100 und die Antriebsritzel-Wanne 102 in den Getriebeölsumpf 46 gelangen. Lediglich eine abflusslose Tasche 112 unterhalb des Getriebeölsumpf-Auslasses 100 beherbergt dauerhaft einen behälterinternen Ölsumpf, der sich insbesondere zum Abscheiden von Schmutz eignet. Die in Figur 10 untere gestrichelte Pegellinie illustriert den Ölpegelstand im Ölbehälter 44 nach maximaler Entleerung.

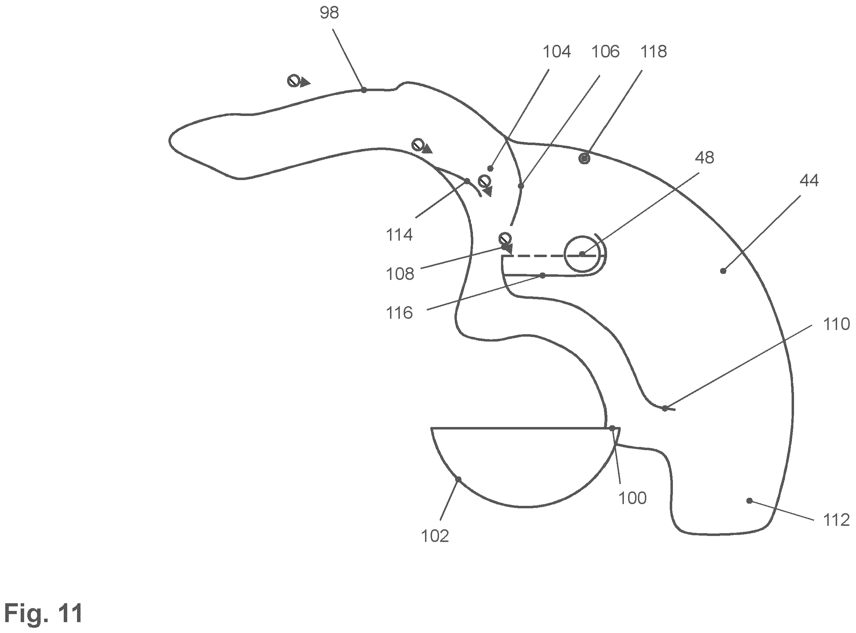

Figur 11 zeigt den gleichen Schnitt durch den Ölbehälter 44 wie Figur 10, allerdings nicht bei Starkströmungsbetrieb, sondern in einem Schwachströmungsbetrieb bei sehr langsamem Betrieb der Antriebsanordnung 10 bzw. unmittelbar nach deren Start. Entsprechend gering ist der Ölfluss, wie durch die modifizierten Ölförderpfeile in Figur 11 gegenüber Figur 10 angedeutet. Das lediglich rinnsal- oder tropfenartig geförderte Öl gelangt nicht bis zur Prallwand 106 sondern fließt an der dieser gegenüberliegenden Kanalwand ab. Unterhalb der Einlassöffnung 98 ist diese Kanalwand daher mit einem Ölleitvorsprung 114 ausgestattet, der schräg oberhalb des Durchlasses 108 endet, sodass an seiner Kante abtropfendes oder ablaufendes Öl durch besagten Durchlass 108 auf die Rückseite der Prallwand 106 fließt. Dort wird es von einem wannenartigen Zwischenboden 116 aufgefangen, der es unmittelbar zum Rotorwellen-Auslass 48 leitet. Dies bedeutet also, dass bereits bei sehr geringem, langsamem Ölfluss eine Beölung des Rotorwellen-Innenraums möglich ist und nicht erst das zuvor beschriebene Ansteigen des Ölpegels um das untere, freie Ende 110 der Prallwand 106 herum abgewartet werden muss. Der Vollständigkeit halber sei noch auf eine Entlüftungsöffnung 118 im oberen, oberhalb jedes bei Normalbetrieb denkbaren Ölpegels im Behälter 44 hingewiesen.

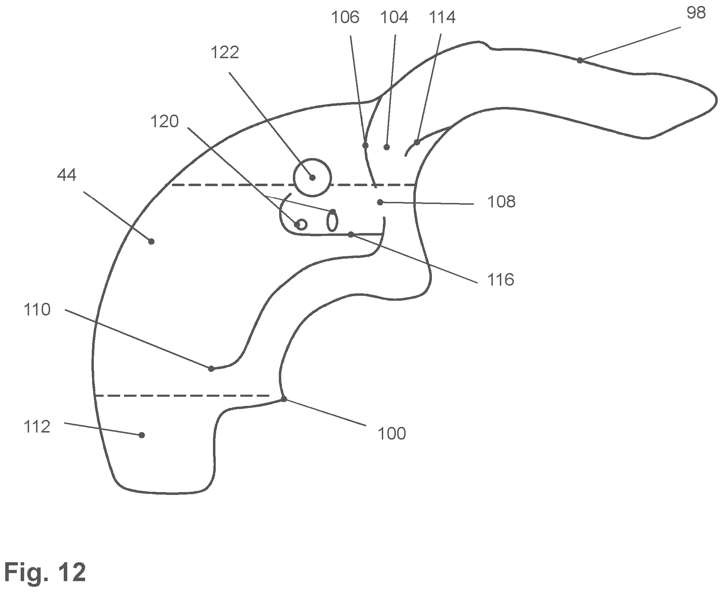

Figur 12 zeigt ebenfalls einen Schnitt durch den Ölbehälter 44, illustriert allerdings mit Blickrichtung in den Motorraum 14. Unmittelbar oberhalb des Zwischenbodens 116 sind zwei unterschiedlich dimensionierte Lager-Auslässe 120 sowie, weiter oberhalb, ein Not-Auslass 122 zum Motorraum 14 angeordnet. Durch die Lager-Auslässe 120 an der bezeichneten Stelle ist sichergestellt, dass neben der Rotorwellen-Kühlung auch die Schmierung wesentlicher Lager, die über nicht im Detail dargestellte Ölleitsysteme mit den Lager-Auslässen 120 verbunden sind, auch bei langsamem Betrieb oder unmittelbar nach einem Start der Antriebsanordnung 10 gewährleistet ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Antriebsanordnung
- 12: Gehäuse
- 14: Motorraum
- 16: Getrieberaum
- 18: innere Stirnwand
- 20: äußere Stirnwand des Motorraums 14
- 22: äußere Stirnwand des Getrieberaums 16
- 24: Mantelwand des Motorraums 14
- 26: Mantelwand des Getrieberaums 16
- 28: elektrische Maschine
- 30: Stator
- 32: Rotor
- 34: Rotorwelle
- 36: Antriebswelle
- 38: Getriebe
- 40: Antriebsritzel
- 42: Ausgangsrad
- 44: Ölbehälter
- 46: Getriebeölsumpf
- 48: Rotorwellen-Auslass
- 50: Stufe
- 52: Radialöffnung der Rotorwelle
- 54: Wickelkopf des Stators
- 56: Kühlwassermantel
- 58: Labyrinthraum
- 60: Motorraum-Ablauf
- 62: Motorraum-Überlauf
- 64: Luftspalt
- 66: Kühlrippe
- 68: Labyrinthraum-Überlauf
- 70: Boden des Labyrinthraums
- 72: Ölleitelement
- 74: Saugraum
- 76: Ölpumpe
- 78: Ölverteilerkanal
- 78a: erster Zweig von 78
- 78b: zweiter Zweig von 78
- 80: Deckelraum
- 82: weiterer Motorraum-Überlauf
- 84: Labyrinthraum-Überlauf
- 85: Verengungsblende
- 86: Ringmagnet
- 88: Ölleitrohr
- 90: Fixierstern
- 92: Rohrstutzen
- 94: Stromschiene
- 96: Düsenöffnung
- 98: Einlassöffnung des Ölbehälters 44
- 100: Getriebeölsumpf-Auslass
- 102: Antriebsritzel-Wanne
- 104: Einlasskanal
- 106: Prallwand
- 108: Durchlass in 106
- 110: freies Ende von 106
- 112: Tasche
- 114: Ölleitvorsprung
- 116: Zwischenboden
- 118: Entlüftungsöffnung
- 120: Lager-Auslass
- 122: Motorraum-(Not-)Auslass

## Patentansprüche

1. Antriebsanordnung (10) für ein Kraftfahrzeug, umfassend
- ein Gehäuse (12) mit einem Motorraum (14) und einem an den Motorraum (14) angrenzenden, über eine innere Stirnwand (18) von diesem abgegrenzten Getrieberaum (16), jeweils begrenzt durch besagte innere Stirnwand (18), eine zugeordnete äußere Stirnwand (20, 22) und eine sich in axialer Richtung zwischen der inneren und der zugeordneten äußeren Stirnwand (18; 20, 22) erstreckende Mantelwand (24, 26),
- eine in dem Motorraum (14) angeordnete elektrische Maschine (28) mit einem gehäusefesten Stator (30) und einem radial innerhalb des Stators (30) angeordneten Rotor (32) mit einer die innere Stirnwand (18) sowie die äußere Stirnwand (20) des Motorraums (14) durchsetzenden, im Motorraum (14) drehbar gelagerten, hohlen Rotorwelle (34), welche mit einer offenen, eine zentrale Durchgangsöffnung aufweisenden Stirnfläche versehen ist, und
- einen aktiven Ölkreislauf mit einer Ölpumpe (76), mittels derer Öl aus einem Ölreservoir durch einen wenigstens einen ersten Zweig (78a) umfassenden Ölverteilerkanal (78) über ein an das stromabwärtige Ende des ersten Zweiges (78a) des Ölverteilerkanals (78) angeschlossenes Ölleitrohr (88), welches mit seinem freien Ende durch die zentrale Durchgangsöffnung in den Innenraum der Rotorwelle (34) ragt, in den Innenraum der hohlen Rotorwelle (34) pumpbar ist,
**dadurch gekennzeichnet,**
**dass** axial benachbart zu der äußeren Stirnwand (20) des Motorraums (14) ein Deckelraum (80) als ein weiterer Raum des Gehäuses (12) angeordnet ist, in welchen die die zentrale Durchgangsöffnung aufweisende Stirnfläche der Rotorwelle (34) sowie das stromabwärtige Ende des ersten Zweiges (78a) des Ölverteilerkanals (78) hineinragen,
wobei der Deckelraum (80) von Stromschienen (94) durchsetzt ist und das Ölleitrohr (88) beabstandet von seinem freien Ende seitliche Düsenöffnungen (96) aufweist, durch welche Öl auf besagte Stromschienen spritzbar ist.

2. Antriebsanordnung (10) nach Anspruch 1,
**dadurch gekennzeichnet,**
**dass** sich die lichte Weite der Durchgangsöffnung stufenweise zur größeren lichten Weite des Innenraums der Rotorwelle (34) erweitert, wobei das Ölleitrohr (88) wenigstens eine Stufe (50) in axialer Richtung überragt.

3. Antriebsanordnung (10) nach einem der vorangehenden Ansprüche,
**dadurch gekennzeichnet,**
**dass** die hohle Rotorwelle (34) in ihren stirnwandnahen, axialen Endbereichen innerhalb des Motorraums (14) Radialöffnungen (52) aufweist, durch die hindurch bei Rotation des Rotors (32) Öl aus dem hohlen Inneren der Rotorwelle (34) auf die axialen Endbereiche des Stators (30) schleuderbar ist.

4. Antriebsanordnung (10) nach einem der vorangehenden Ansprüche,
**dadurch gekennzeichnet,**
**dass** das freie Ende des Ölleitrohres (88) als ein Rohrstutzen (92) ausgebildet ist, der sich in axialer Richtung aus dem Zentrum eines Fixiersterns (90) mit einer Mehrzahl radial erstreckter Auslegerarme erstreckt, welche an ihren freien Enden an den der äußeren Stirnwand (20) des Motorraums (14) festgelegt sind.

5. Antriebsanordnung (10) nach einem der vorangehenden Ansprüche,
**dadurch gekennzeichnet,**
**dass** im unteren Bereich des Deckelraums (80) ein Überlauf (84) zu dem Ölreservoir angeordnet ist.

6. Antriebsanordnung (10) nach einem der vorangehenden Ansprüche,
**dadurch gekennzeichnet,**
**dass** der Ölverteilerkanal (78) in zwei Zweige, nämlich besagten ersten Zweig (78a) und einen zweiten Zweig (78b) verzweigt ist, wobei über den zweiten Zweig (78b) Öl aus dem Ölreservoir mittels der Ölpumpe (76) in den Getrieberaum (16) pumpbar ist.

7. Antriebsanordnung (10) nach Anspruch 6,
**dadurch gekennzeichnet,**
**dass** sich die beiden Zweige (78a, 78b) des Ölverteilerkanals (78) von einer Verzweigungsstelle aus in entgegengesetzten Richtungen parallel zur Axialrichtung der elektrischen Maschine (28) erstrecken.

8. Antriebsanordnung (10) nach Anspruch 7,
**dadurch gekennzeichnet,**
**dass** von der Ölpumpe (76) aus eine senkrecht zur Axialrichtung der elektrischen Maschine erstreckte Zuleitung zu der Verzweigungsstelle führt.

9. Antriebsanordnung (10) nach einem der Ansprüche 6 bis 8,
**dadurch gekennzeichnet,**
**dass** im zweiten Zweig (78b) des Ölverteilerkanals (78) eine Verengungsblende (85) angeordnet ist.

10. Antriebsanordnung (10) nach Anspruch 9,
**dadurch gekennzeichnet,**
**dass** stromaufwärts benachbart zu der Verengungsblende (85) ein Ringmagnet (86) im zweiten Zweig (78b) des Ölverteilerkanals (78) angeordnet ist.

## Claims

1. Drive assembly (10) for a motor vehicle, comprising
- a housing (12) having an engine compartment (14) and a transmission compartment (16) which adjoins the engine compartment (14) and is delimited therefrom by means of an inner bulkhead (18), in each case delimited by said inner bulkhead (18), an associated outer bulkhead (20, 22) and a casing wall (24, 26) extending in the axial direction between the inner and the associated outer bulkhead (18; 20, 22),
- an electric machine (28) which is arranged in the engine compartment (14) and has a stator (30) which is fastened to the housing, and a rotor (32) which is arranged radially within the stator (30) and has a hollow rotor shaft (34) which passes through the inner bulkhead (18) and the outer bulkhead (20) of the engine compartment (14) and is rotatably mounted in the engine compartment (14), which rotor shaft is provided with an open end face that has a central through-opening, and
- an active oil circuit which has an oil pump (76) by means of which oil can be pumped from an oil reservoir, through an oil distribution channel (78) which comprises at least a first branch (78a), and into the interior of the hollow rotor shaft (34) via an oil guide tube (88) connected to the downstream end of the first branch (78a) of the oil distribution channel (78), which tube projects with its free end through the central through-opening into the interior of the rotor shaft (34),
**characterized in that**
a cover compartment (80) is arranged axially adjacent to the outer bulkhead (20) of the engine compartment (14) as an additional compartment of the housing (12), into which cover compartment the end face of the rotor shaft (34) which has the central through-opening and the downstream end of the first branch (78a) of the oil distribution channel (78) project,
wherein busbars (94) pass through the cover compartment (80), and the oil guide tube (88) has lateral nozzle openings (96) spaced apart from its free end, through which oil can be sprayed onto said busbars.

2. Drive assembly (10) according to claim 1,
**characterized in that**
the clear width of the through-opening widens in stages towards the larger clear width of the interior of the rotor shaft (34), wherein the oil guide tube (88) projects beyond at least one stage (50) in the axial direction.

3. Drive assembly (10) according to either of the preceding claims,
**characterized in that**
the hollow rotor shaft (34) has radial openings (52) in its axial end regions within the engine compartment (14) that are close to the bulkhead, through which openings oil can be thrown from the hollow interior of the rotor shaft (34) onto the axial end regions of the stator (30) during rotation of the rotor (32).

4. Drive assembly (10) according to any of the preceding claims,
**characterized in that**
the free end of the oil guide tube (88) is designed as a tubular connecting piece (92) which extends in the axial direction from the center of a fixing star (90) with a plurality of radially extending cantilever arms which are fastened at their free ends to the the outer bulkhead (20) of the engine compartment (14).

5. Drive assembly (10) according to any of the preceding claims,
**characterized in that**
an overflow (84) to the oil reservoir is arranged in the lower region of the cover compartment (80).

6. Drive assembly (10) according to any of the preceding claims,
**characterized in that**
the oil distribution channel (78) branches into two branches, namely said first branch (78a) and a second branch (78b), wherein oil can be pumped, by means of the oil pump (76), from the oil reservoir into the transmission compartment (16) via the second branch (78b).

7. Drive assembly (10) according to claim 6,
**characterized in that**
the two branches (78a, 78b) of the oil distribution channel (78) extend from a branching point in opposite directions, in parallel with the axial direction of the electric machine (28).

8. Drive assembly (10) according to claim 7,
**characterized in that**
a supply line extending perpendicularly to the axial direction of the electric machine leads from the oil pump (76) to the branching point.

9. Drive assembly (10) according to any of claims 6 to 8,
**characterized in that**
a narrowing aperture (85) is arranged in the second branch (78b) of the oil distribution channel (78).

10. Drive assembly (10) according to claim 9,
**characterized in that**
a ring magnet (86) is arranged upstream, adjacent to the narrowing aperture (85), in the second branch (78b) of the oil distribution channel (78).

## Revendications

1. Agencement d'entraînement (10) pour un véhicule automobile, comprenant
- un boîtier (12) comportant un compartiment moteur (14) et un compartiment de transmission (16) adjacent au compartiment moteur (14) et délimité par rapport à celui-ci par une paroi frontale interne (18), respectivement délimité par ladite paroi frontale interne (18), une paroi frontale externe (20, 22) associée et une paroi d'enveloppe (24, 26) s'étendant dans la direction axiale entre la paroi frontale interne et la paroi frontale externe associée (18 ; 20, 22),
- une machine électrique (28) agencée dans le compartiment moteur (14) comportant un stator (30) solidaire du boîtier et un rotor (32) agencé radialement à l'intérieur du stator (30) comportant un arbre de rotor (34) creux traversant la paroi frontale interne (18) ainsi que la paroi frontale externe (20) du compartiment moteur (14) et placé de manière à pouvoir tourner dans le compartiment moteur (14), lequel arbre est pourvu d'une surface frontale ouverte présentant une ouverture de passage centrale, et
- un circuit d'huile actif comportant une pompe à huile (76), au moyen de laquelle de l'huile peut être pompée dans l'espace interne de l'arbre de rotor (34) creux à partir d'un réservoir d'huile à travers un canal de distribution d'huile (78) comprenant au moins une première branche (78a), par l'intermédiaire d'un tube de conduite d'huile (88) raccordé à l'extrémité aval de la première branche (78a) du canal de distribution d'huile (78), lequel tube fait saillie avec son extrémité libre dans l'espace interne de l'arbre de rotor (34) à travers l'ouverture de passage centrale,
**caractérisé en ce**
**que**
axialement adjacent à la paroi frontale externe (20) du compartiment moteur (14)
est agencé un compartiment de couvercle (80) en guise d'autre compartiment du boîtier (12)
dans lequel pénètrent la surface frontale de l'arbre de rotor (34) présentant l'ouverture de passage centrale ainsi que l'extrémité aval de la première branche (78a) du canal de distribution d'huile (78),
dans lequel le compartiment de couvercle (80) est traversé par des rails conducteurs (94) et le tube de conduite d'huile (88) présente, à distance de son extrémité libre, des ouvertures de buses latérales (96) à travers lesquelles de l'huile peut être projetée sur lesdits rails conducteurs.

2. Agencement d'entraînement (10) selon la revendication 1,
**caractérisé en ce**
**que** la largeur intérieure de l'ouverture de passage s'élargit par étapes vers la largeur intérieure plus grande de l'espace interne de l'arbre de rotor (34), dans lequel le tube de conduite d'huile (88) dépasse au moins une étape (50) dans la direction axiale.

3. Agencement d'entraînement (10) selon l'une des revendications précédentes,
**caractérisé en ce**
**que** l'arbre de rotor (34) creux présente, dans ses zones d'extrémité axiales proches de la paroi frontale à l'intérieur du compartiment moteur (14), des ouvertures radiales (52), à travers lesquelles, lors de la rotation du rotor (32), de l'huile peut être projetée depuis l'intérieur creux de l'arbre de rotor (34) sur les zones d'extrémité axiales du stator (30).

4. Agencement d'entraînement (10) selon l'une des revendications précédentes, **caractérisé en ce**
**que** l'extrémité libre du tuyau de conduite d'huile (88) est réalisée comme un raccord de tube (92) qui s'étend dans la direction axiale à partir du centre d'une étoile de fixation (90) comportant une pluralité de bras en porte-à-faux s'étendant radialement, qui sont fixés à leurs extrémités libres à ceux de la paroi frontale externe (20) du compartiment moteur (14).

5. Agencement d'entraînement (10) selon l'une des revendications précédentes,
**caractérisé en ce**
**qu'**un trop-plein (84) vers le réservoir d'huile est agencé dans la zone inférieure du compartiment de couvercle (80).

6. Agencement d'entraînement (10) selon l'une des revendications précédentes,
**caractérisé en ce**
**que** le canal de distribution d'huile (78) est ramifié en deux branches, à savoir ladite première branche (78a) et une seconde branche (78b), dans lequel de l'huile peut être pompée par l'intermédiaire de la seconde branche (78b) depuis le réservoir d'huile au moyen de la pompe à huile (76) dans le compartiment de transmission (16).

7. Agencement d'entraînement (10) selon la revendication 6,
**caractérisé en ce**
**que** les deux branches (78a, 78b) du canal de distribution d'huile (78) s'étendent à partir d'un point de ramification dans des directions opposées parallèlement à la direction axiale de la machine électrique (28).

8. Agencement d'entraînement (10) selon la revendication 7,
**caractérisé en ce**
**qu'**une conduite d'alimentation s'étendant perpendiculairement à la direction axiale de la machine électrique mène au point de ramification à partir de la pompe à huile (76).

9. Agencement d'entraînement (10) selon l'une des revendications 6 à 8,
**caractérisé en ce**
**qu'**un diaphragme de rétrécissement (85) est agencé dans la seconde branche (78b) du canal de distribution d'huile (78).

10. Agencement d'entraînement (10) selon la revendication 9,
**caractérisé en ce**
**qu'**un aimant annulaire (86) est agencé en amont, adjacent au diaphragme de rétrécissement (85), dans la seconde branche (78b) du canal de distribution d'huile (78).
